# EUROPEAN PATENT SPECIFICATION

(11) **EP 4 514 592 B1**
(45) Date of publication and mention of the grant of the patent: **09.12.2026**
(21) Application number: 23721433.3
(22) Date of filing: 28.04.2023
(51) Int. Cl.: B29C 65/14

(54) **METHOD AND DEVICE FOR INFRARED WELDING OF POLYMER COMPOSITES**
VERFAHREN UND VORRICHTUNG ZUM INFRAROTSCHWEISSEN VON POLYMERVERBUNDWERKSTOFFEN
PROCÉDÉ ET DISPOSITIF DE SOUDAGE INFRAROUGE DE COMPOSITES POLYMÈRES

(30) Priority: 29.04.2022 LU 501976
(43) Date of publication of application: 05.03.2025
(73) Proprietor: LUXEMBOURG INSTITUTE OF SCIENCE AND TECHNOLOGY (LIST), 4362 Esch-sur-Alzette (LU)
(72) Inventor: PERRIN, Henri, 4362 Esch-sur-Alzette (LU); BORGHINI, Loïc, 4362 Esch-sur-Alzette (LU); KLEIN, Sébastien, 4362 Esch-sur-Alzette (LU)
(74) Representative: Ipsilon Luxembourg
(86) International application number: PCT/EP2023/061357
(87) International publication number: WO 2023/209209

(56) References cited:
- JP-A- S5 117 276

## Description

### Technical Field

The invention relates to the manufacturing process of welding of polymer composites. More specifically, the invention provides a solution for welding polymers by infrared welding.

### Background Art

Infrared welding is a technique that is adequately used for binding plastic materials together. It consists in placing two workpieces in holders (as in forging dies) and, after radiating with infrared light appropriate portions of the workpieces, to apply a force between the two workpieces to bond them together.

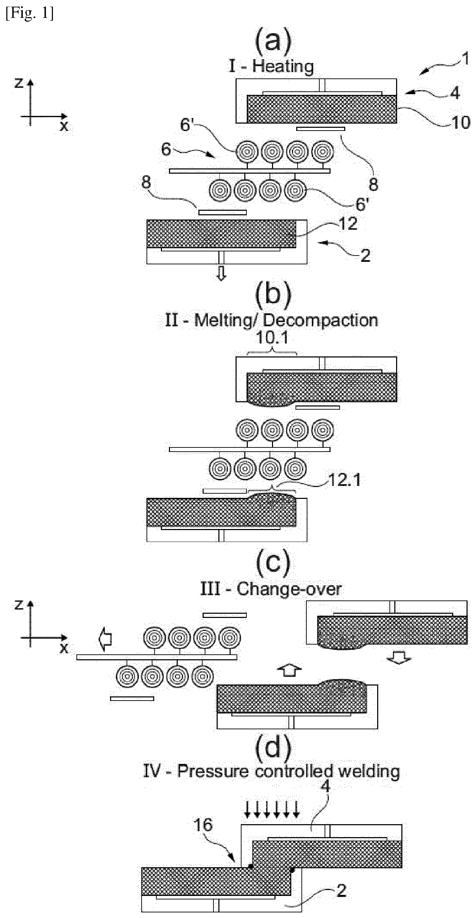

[Fig.1] illustrates such a technique. The system 1 comprises a lower tool 2 and an upper tool 4, the latter being movable vertically (direction z). A heating assembly 6 comprising a series of infrared lamps 6' is movable transversally (along x), together with screens 8 preventing the radiations from the lamps 6' to reach the entirety of the workpieces 10 and 12 to be bonded together.

[Fig.1] shows the four main steps of infrared welding: in step (a), the lamps are switched ON and start to radiate; in step (b) a portion 10.1, 12.1 of the workpieces 10, 12 starts to melt or decompact (and thus increases in width); in step (c) the heating lamps and screens are retracted and in step (d) the tools 2, 4 are brought towards each other to apply a welding pressure.

The retractation of the heating means and the subsequent application of the welding pressure takes around 3 to 5 seconds in the known technique. This corresponds to the incompressible time that is necessary to operate the pneumatic or hydraulic actuators to retract the heating means, the time for the sensors to detect the full retractation of the heating means and for the PLC to confirm that the heating means are retracted, and the time for the upper tool to start its vertical descent.

This known technique however does not suit welding operations of materials with high heat conductivity. For instance, carbon-fibre reinforced thermoplastics (CFRTP) have a heat conductivity (4-7 W.m⁻¹.K⁻¹ in fiber direction, 0.5-1 W.m⁻¹.K⁻¹ in transversal direction ) that is 5 to 10 times higher than the heat conductivity of some other polymers. The variation of temperature through-out the workpiece can significantly impact the structure (porosity, crystallisation rate) of the end product. Due to its high heat conductivity, a CFRTP material heated at 350°C loses between 30 and 80°C per second. This means that to ensure that the temperature of the CFRTP is appropriate at the moment when the two workpieces are in contact (i.e., 3 to 5 seconds after heating has stopped), the CFRTP should theoretically be overheated at more than 450°C.

However, overheating is not an option for CFRTP materials because these materials degrade and potentially become crosslinked, thereby preventing them from being weldable thereafter. Patent Document JP S 5117276 A discloses a known system for welding workpieces made of thermoplatsic materials contactless with a moving lower tool, a heating assembly and a mechanism configured for moving synchronously the lower tool and the heating assembly.

There is therefore a need to provide a welding system and a method for welding CFRTP by infrared radiations.

### Summary of the invention

The invention aims at providing a system and a method which overcome the drawbacks discussed above, and ultimately enable to properly bond by infrared radiations two workpieces of CFRTP, with a bond of high quality.

The invention relates to a system for infrared welding a first workpiece made of carbon-fibre reinforced thermoplastic polymers, CFRTP, to a second workpiece made of CFRTP, the system comprising: an upper tool, for holding the first workpiece, wherein the upper tool is movable in a vertical direction; a lower tool, for holding the second workpiece; a heating assembly comprising infrared heating means and configured to move in a transverse direction between an operative position where the heating means can simultaneously heat a respective portion of the first workpiece and of the second workpiece, and a resting position; and a mechanism configured for moving synchronously the upper tool and the heating assembly, the mechanism comprising: a mechanical connection connecting the upper tool to the heating assembly; and an actuator acting directly on one of the upper tool or the heating assembly, whereas the other one of the upper tool or the heating assembly is moved via the mechanical connection.

With such a system, the time between the end of heating and the moment when the two workpieces contact each other is substantially reduced to about 1.5 second, hence half to three times faster than the known system.

According to an advantageous embodiment, the system further comprises springs to support the lower tool in a vertically movable manner on a vertically fixed support. These springs enable to control the maximum pressure applied between the two workpieces.

According to an advantageous embodiment, the system comprises a stopper for interrupting the downward movement of the upper tool. This stopper enables to control the geometry of the finally product.

According to an advantageous embodiment, the system comprises a damper for dampening the movement of the heating assembly.

According to an advantageous embodiment, the mechanical connection is a rod which forms a pivot connection with the upper tool as well as a pivot connection with the heating assembly. Alternative connections can also be foreseen, such as a chain and pulley assembly, scissor rods with rollers engaging in rails, etc.

The invention also relates to a method for infrared welding a first workpiece made of carbon-fibre reinforced thermoplastic polymers, CFRTP, to a second workpiece made of CFRTP, the method being carried out with a system according to an embodiment described above, the method comprising: heating a respective portion of the first and second workpieces with the infrared heating assembly; synchronously moving: the heating assembly transversally; and the upper tool downwardly.

According to an advantageous embodiment, the system further comprises springs to support the lower tool in a vertically movable manner, such that the welding pressure between the two workpieces resulting from the downward movement of the upper tool is limited by the springs.

According to an advantageous embodiment, the system comprises a stopper and the movement of the heating assembly and of the upper tool stops simultaneously when the upper tool contacts the stopper during its downward motion.

According to an advantageous embodiment, the system comprises a damper and the movement of the heating assembly and of the upper tool is dampened by the damper.

### Benefits of the invention

The several aspects of the invention ensure to various degrees to enable to obtain with infrared welding a carbon-fibre reinforced product of high quality (aeronautics quality standard). The system and method of the invention also allow to obtain robust products of various thicknesses (even above 12 mm thick).

The system enables to reduce the time gap between the end of the heating step and the beginning of the application of welding pressure to about 1.5 seconds. This renders the process faster but more importantly this duration improves greatly the quality of the end product since there is no need to overheat the CFRTP material and a weld joint of better quality ensues.

The system is also reliable and cost efficient, as well as simpler to control as it only requires one actuator to be commanded.

Further benefits may be apparent in relation to the discussion of the figures below.

### Brief description of the figures

[Fig.1] shows a method according to prior art;
[Fig.2] shows the system of the invention.

### Detailed description of preferred embodiments

The following examples and drawings are given for illustration purposes only. The invention is not limited by these examples but only by the appended claims. The various parts of the system can have various properties or be embodied in various ways. Each variant of each part of the system may be combined with each variant of any other parts of the system, unless explicitly mentioned otherwise.

The drawings are schematic and not drawn to scale. Some elements of the system are not illustrated, such as for example: elements for assembling the various parts together (flanges, screws, etc.), elements for properly ensuring sealing of various compartments (seals, etc.), or elements for controlling the system (wires, sensors, actuators, valves, safety devices, etc.).

[Fig.1] is discussed above in relation to the background art.

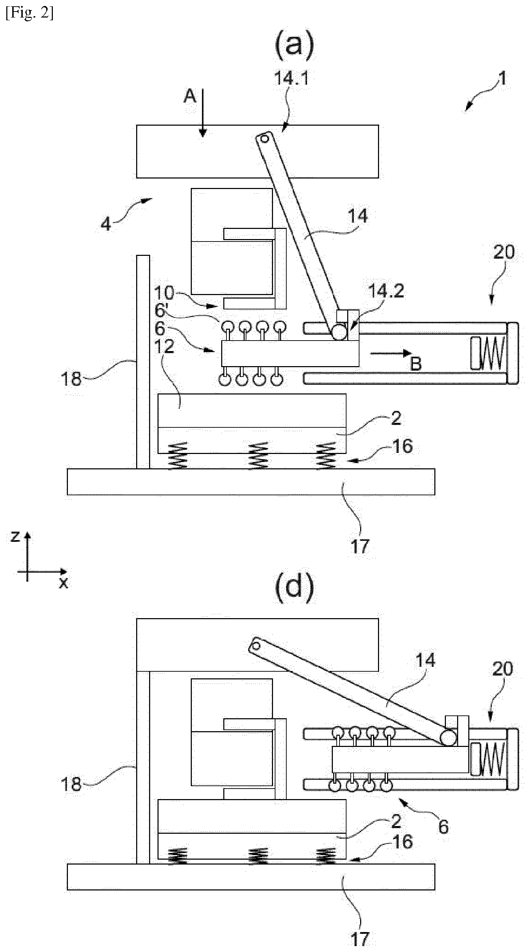

[Fig.2] shows a system of the invention in the two extreme positions of the system.

In a step (a) of heating, infrared lights 6' of a heating assembly 6 are positioned in an operative position between two tools 2, 4 holding the workpieces 10, 12. The heating assembly 6 can be as such substantially similar to the known heating assembly of [Fig. 1].

A connection rod 14 connects kinematically the upper tool 4 to the heating assembly 6. The rod 14 is engaged in a pivoting manner with the upper tool 4 at a first pivot joint 14.1 and is engaged in a pivoting manner with the heating assembly 6 at a second pivot joint 14.2.

An actuator, materialized by arrow A can be provided to move the upper tool 4 downwards. Alternatively, the actuator is materialized by the arrow B and moves the heating assembly 6 transversally. In both cases, due to the connecting rod 14, the actuator moves simultaneously both the upper tool and the heating assembly.

Once the workpieces 10, 12 are heated to their melting or decompacting point, the actuator is operated to simultaneously move the lamps transversally away and move the upper tool 4 downwards so that the workpieces 10, 12 contact each other.

The bottom portion of [Fig.2] shows the system 1 in a final position.

The lower tool 2 is supported by springs 16 on a fixed platform 17. The springs 16 are chosen to have a predetermined stiffness, so that the pressure exerted by the upper tool 4 on the interface between the two workpieces 10,12 does not exceed a predetermined amount.

A stopper 18 can be foreseen to stop the vertical movement of the upper tool 4 so that the path of the upper tool and hence the final geometry of the weld joint is controlled.

In addition, a damper 20 can be arranged to slow down the movement of the heating assembly 6 (and upper tool) before or after the workpieces 10, 12 contact each other. The heating assembly can comprise fragile elements (lamps) and dampening the movement may avoid any failure due to an abrupt stop.

The application targets specifically welding joints of two workpieces which are at least partly flat in the vicinity of the weld joint. For instance, [Fig.2] illustrates a reinforcing rib 10 to be welded to a skin. The invention is however not limited to this particular example and can be adapted to various types or various geometries of weld bead.

## Claims

1. System (1) for infrared welding a first workpiece (10) made of carbon-fibre reinforced thermoplastic polymers, CFRTP, to a second workpiece (12) made of CFRTP, the system comprising:
- an upper tool (4), for holding the first workpiece (10), wherein the upper tool (4) is movable in a vertical direction (z);
- a lower tool (2), for holding the second workpiece (12);
- a heating assembly (6) comprising infrared heating means and configured to move in a transverse direction (x) between an operative position where the heating means can simultaneously heat a respective portion (10.1, 12.1) of the first workpiece and of the second workpiece (10, 12), and a resting position; and
- a mechanism configured for moving synchronously the upper tool (4) and the heating assembly, the mechanism comprising:
a mechanical connection (14) connecting the upper tool (4) to the heating assembly (6); and
an actuator (A, B) acting directly on one of the upper tool (4) or the heating assembly (6), whereas the other one of the upper tool (4) or the heating assembly (6) is moved via the mechanical connection (14).

2. System (1) according to claim 1, **characterized in that** the system (1) further comprises springs (16) to support the lower tool (2) in a vertically movable manner on a vertically fixed support (17).

3. System (1) according to claim 1 or 2, **characterized in that** the system (1) comprises a stopper (18) for interrupting the downward movement of the upper tool (4).

4. System (1) according to any of claims 1-3, **characterized in that** the system (1) comprises a damper (20) for dampening the movement of the heating assembly (6).

5. System (1) according to any of claims 1-4, **characterized in that** the mechanical connection (14) is a rod which forms a pivot connection (14.1) with the upper tool (4) as well as a pivot connection (14.2) with the heating assembly (6).

6. Method for infrared welding a first workpiece (10) made of carbon-fibre reinforced thermoplastic polymers, CFRTP, to a second workpiece (12) made of CFRTP, the method being carried out with a system (1) according to any of claims 1 to 5, the method comprising:
- heating (a) a respective portion (10.1, 12.1) of the first and second workpieces (10, 12) with the infrared heating assembly (6);
- synchronously moving (c):
- the heating assembly (6) transversally; and
- the upper tool (4) downwardly.

7. Method according to claim 6, **characterized in that** the system (1) further comprises springs (16) to support the lower tool (2) in a vertically movable manner, such that the welding pressure between the two workpieces (10, 12) resulting from the downward movement of the upper tool (4) is limited by the springs (16).

8. Method according to claim 6 or 7, **characterized in that** the system (1) comprises a stopper (18) and the movement of the heating assembly (6) and of the upper tool (4) stops simultaneously when the upper tool (4) contacts the stopper (18) during its downward motion.

9. Method according to any of claims 6-8, **characterized in that** the system comprises a damper (20) and the movement of the heating assembly (6) and of the upper tool (4) is dampened by the damper (20).

## Patentansprüche

1. System (1) zum Infrarotschweißen eines ersten Werkstücks (10) aus kohlenstofffaserverstärkten thermoplastischen Polymeren (CFRTP) mit einem zweiten Werkstück (12) aus CFRTP, wobei das System Folgendes umfasst:
- ein Oberwerkzeug (4) zum Halten des ersten Werkstücks (10), wobei das Oberwerkzeug (4) in einer vertikalen Richtung (z) bewegbar ist;
- ein Unterwerkzeug (2) zum Halten des zweiten Werkstücks (12);
- eine Heizeinheit (6), die Infrarot-Heizmittel umfasst und dazu eingerichtet ist, sich in einer Querrichtung (x) zwischen einer Arbeitsstellung, in der die Heizmittel gleichzeitig einen jeweiligen Abschnitt (10.1, 12.1) des ersten Werkstücks und des zweiten Werkstücks (10, 12) erwärmen können, und einer Ruhestellung zu bewegen; und
- einen Mechanismus, der dazu eingerichtet ist, das Oberwerkzeug (4) und die Heizeinheit (6) synchron zu bewegen, wobei der Mechanismus Folgendes umfasst:
eine mechanische Verbindung (14), die das Oberwerkzeug (4) mit der Heizeinheit (6) verbindet; und
einen Aktuator (A, B), der direkt auf eines von dem Oberwerkzeug (4) oder der Heizeinheit (6) einwirkt, während das andere von dem Oberwerkzeug (4) oder der Heizeinheit (6) über die mechanische Verbindung (14) bewegt wird.

2. System (1) nach Anspruch 1, **dadurch gekennzeichnet, dass** das System (1) weiterhin Federn (16) umfasst, um das Unterwerkzeug (2) in vertikal beweglicher Weise an einer vertikal festen Stütze (17) abzustützen.

3. System (1) nach Anspruch 1 oder 2, **dadurch gekennzeichnet, dass** das System (1) einen Anschlag (18) umfasst, um die Abwärtsbewegung des Oberwerkzeugs (4) zu unterbrechen.

4. System (1) nach einem der Ansprüche 1 bis 3, **dadurch gekennzeichnet, dass** das System (1) einen Dämpfer (20) zum Dämpfen der Bewegung der Heizeinheit (6) umfasst.

5. System (1) nach einem der Ansprüche 1 bis 4, **dadurch gekennzeichnet, dass** die mechanische Verbindung (14) eine Stange ist, die sowohl mit dem Oberwerkzeug (4) als auch mit der Heizeinheit (6) jeweils eine Drehverbindung (14.1, 14.2) bildet.

6. Verfahren zum Infrarotschweißen eines ersten Werkstücks (10) aus kohlenstofffaserverstärkten thermoplastischen Polymeren (CFRTP) mit einem zweiten Werkstück (12) aus CFRTP, wobei das Verfahren mit einem System (1) nach einem der Ansprüche 1 bis 5 durchgeführt wird, wobei das Verfahren Folgendes umfasst:
- Erwärmen (a) eines jeweiligen Abschnitts (10.1, 12.1) der beiden Werkstücke (10, 12) mit der Infrarot-Heizeinheit (6);
- synchrones Bewegen (c):
- der Heizeinheit (6) in Querrichtung; und
- des Oberwerkzeugs (4) nach unten.

7. Verfahren nach Anspruch 6, **dadurch gekennzeichnet, dass** das System (1) weiterhin Federn (16) umfasst, um das Unterwerkzeug (2) in vertikal beweglicher Weise abzustützen, so dass der Schweißdruck zwischen den beiden Werkstücken (10, 12), der sich aus der Abwärtsbewegung des Oberwerkzeugs (4) ergibt, durch die Federn (16) begrenzt ist.

8. Verfahren nach Anspruch 6 oder 7, **dadurch gekennzeichnet, dass** das System (1) einen Anschlag (18) umfasst und dass die Bewegung der Heizeinheit (6) und des Oberwerkzeugs (4) gleichzeitig stoppt, wenn das Oberwerkzeug (4) während seiner Abwärtsbewegung mit dem Anschlag (18) in Kontakt kommt.

9. Verfahren nach einem der Ansprüche 6 bis 8, **dadurch gekennzeichnet, dass** das System (1) einen Dämpfer (20) umfasst und dass die Bewegung der Heizeinheit (6) und des Oberwerkzeugs (4) durch den Dämpfer (20) gedämpft wird.

## Revendications

1. Système (1) pour le soudage par infrarouge d'une première pièce (10) en polymères thermoplastiques renforcés par fibres de carbone (CFRTP) à une seconde pièce (12) en CFRTP, le système comprenant :
- un outil supérieur (4) destiné à maintenir la première pièce (10), l'outil supérieur (4) étant mobile dans une direction verticale (z) ;
- un outil inférieur (2) destiné à maintenir la seconde pièce (12) ;
- un ensemble de chauffage (6) comprenant des moyens de chauffage infrarouge et configuré pour se déplacer dans une direction transversale (x) entre une position de fonctionnement, dans laquelle les moyens de chauffage peuvent chauffer simultanément une portion respective (10.1, 12.1) de la première pièce et de la seconde pièce (10, 12), et une position de repos ; et
- un mécanisme configuré pour déplacer de manière synchrone l'outil supérieur (4) et l'ensemble de chauffage (6), le mécanisme comprenant :
une liaison mécanique (14) reliant l'outil supérieur (4) à l'ensemble de chauffage (6) ; et
un actionneur (A, B) agissant directement sur l'un parmi l'outil supérieur (4) et l'ensemble de chauffage (6), l'autre parmi l'outil supérieur (4) et l'ensemble de chauffage (6) étant déplacé au moyen de la liaison mécanique (14).

2. Système (1) selon la revendication 1, **caractérisé en ce que** le système (1) comprend en outre des ressorts (16) pour supporter l'outil inférieur (2) de manière mobile verticalement sur un support (17) fixé verticalement.

3. Système (1) selon la revendication 1 ou 2, **caractérisé en ce que** le système (1) comprend une butée (18) destinée à interrompre le mouvement vers le bas de l'outil supérieur (4).

4. Système (1) selon l'une quelconque des revendications 1 à 3, **caractérisé en ce que** le système (1) comprend un amortisseur (20) pour amortir le mouvement de l'ensemble de chauffage (6).

5. Système (1) selon l'une quelconque des revendications 1 à 4, **caractérisé en ce que** la liaison mécanique (14) est une tige qui forme une liaison pivot (14.1) avec l'outil supérieur (4) ainsi qu'une liaison pivot (14.2) avec l'ensemble de chauffage (6).

6. Procédé de soudage par infrarouge d'une première pièce (10) en polymères thermoplastiques renforcés par fibres de carbone (CFRTP) à une seconde pièce (12) en CFRTP, le procédé étant mis en œuvre au moyen d'un système (1) selon l'une quelconque des revendications 1 à 5, le procédé comprenant :
- chauffer (a) une portion respective (10.1, 12.1) des première et seconde pièces (10, 12) au moyen de l'ensemble de chauffage infrarouge (6) ;
- déplacer de manière synchrone (c) :
- l'ensemble de chauffage (6) transversalement ; et
- l'outil supérieur (4) vers le bas.

7. Procédé selon la revendication 6, **caractérisé en ce que** le système (1) comprend en outre des ressorts (16) pour supporter l'outil inférieur (2) de manière mobile verticalement, de telle sorte que la pression de soudage entre les deux pièces (10, 12) résultant du mouvement vers le bas de l'outil supérieur (4) est limitée par les ressorts (16).

8. Procédé selon la revendication 6 ou 7, **caractérisé en ce que** le système (1) comprend une butée (18) et **en ce que** le mouvement de l'ensemble de chauffage (6) et de l'outil supérieur (4) s'arrête simultanément lorsque l'outil supérieur (4) vient en contact avec la butée (18) au cours de son mouvement vers le bas.

9. Procédé selon l'une quelconque des revendications 6 à 8, **caractérisé en ce que** le système (1) comprend un amortisseur (20) et **en ce que** le mouvement de l'ensemble de chauffage (6) et de l'outil supérieur (4) est amorti par l'amortisseur (20).
